# EUROPÄISCHE PATENTSCHRIFT

(11) **EP 0 758 281 B1**
(45) Veröffentlichungstag und Bekanntmachung des Hinweises auf die Patenterteilung: **09.12.1998**
(21) Anmeldenummer: 95913875.1
(22) Anmeldetag: 29.03.1995
(51) Int. Cl.: B23C 5/20

(54) **SCHNEIDEINSATZ, INSBESONDERE ZUM FRÄSEN**
CUTTING INSERT, ESPECIALLY FOR MILLING
PLAQUETTE, UTILISEE NOTAMMENT POUR LE FRAISAGE

(30) Priorität: 03.05.1994 DE 4415453; 07.06.1994 DE 4419839
(43) Veröffentlichungstag der Anmeldung: 19.02.1997
(73) Patentinhaber: Widia GmbH, 45145 Essen (DE)
(72) Erfinder: AGUSTIN PAYA, José, D-45479 Mülheim (DE); BRAUN, Thomas, D-45475 Mülheim (DE)
(74) Vertreter: Vomberg, Friedhelm, Dipl.-Phys.
(86) Internationale Anmeldenummer: DE9500435
(87) Internationale Veröffentlichungsnummer: WO9529784

(56) Entgegenhaltungen:
- EP-A- 0 257 002
- EP-A- 0 414 241
- WO-A-93/11898

## Beschreibung

Die Erfindung betrifft einen Schneideinsatz für die spanende Bearbeitung, insbesondere zum Fräsen, mit einer Spanfläche, die Ausnehmungen enthält, die fortlaufend entlang der Schneidkante angeordnet sind und die den Span quer zur Ablaufrichtung verformen, wobei die Ausnehmungen sich bis zu ihrem rückwärtigen Ende zu schneidkantenferneren Bereichen hin verbreitern.

In der DE 28 40 610 A1 wird ein Schneideinsatz der genannten Art beschrieben, der Ausnehmungen entlang der Schneidkante aufweist, deren Breite oder größte Ausdehnung parallel zur Schneidkante größer ist als der Abstand zwischen zwei benachbarten oder aufeinanderfolgenden Eindrückungen. Diese Eindrückungen durchbrechen die Spanfläche und besitzen eine im wesentlichen scharfe Kante am Übergang zur Schneidkante bzw. der Spanfläche. Die Eindrückungen sind entweder kreisförmig oder sollen eine weniger abgerundete Form besitzen, bei der sich die Ausnehmungen zu ihrem rückwärtigen Ende linear konisch verbreitern.

Die US-A-3 973 308 beschreibt einen Schneideinsatz mit einer auf der Spanfläche an die Schneidkante angrenzenden Fase und Eindrückungen, welche die Grenzlinie dieser Fase zur weiter innenliegenden Spanfläche durchbrechen. Die Eindrückungen sind entweder im wesentlichen rechteckförmig oder zu schneidkantenferneren Bereichen verjüngt, d.h., im wesentlichen dreieckförmig ausgebildet.

Die US-A-4 880 338 betrifft einen Schneideinsatz mit einem mittleren erhabenen Plateau, zwischen dem und der Schneidkante eine nutförmige Ausnehmung entlang der Schneidkante angeordnet ist sowie ggf. eine Fase im Anschluß an die Schneidkante. Die Anstiegsflanken sowie Bereiche des Plateaus werden von etwa tropfenförmigen Ausnehmungen durchbrochen.

Es ist Aufgabe der vorliegenden Erfindung, den Schneideinsatz der genannten Art derart weiterzubilden, daß die Formung und Lenkung eines ablaufenden Spanes und dessen Stabilisierung verbessert werden, wobei der Span beim Ablauf auf der Spanfläche eine möglichst geringe Reibung erfahren und die Schnittkraft gering gehalten werden soll.

Diese Aufgabe wird durch den Schneideinsatz nach Anspruch 1 gelöst, der dadurch gekennzeichnet ist, daß zwischen einer Schneidecke und der ersten Ausnehmung eine rippenförmige Erhöhung mit einer Längsachse vorgesehen ist, die parallel zur ersten schneideckennächsten Grenzlinie der Ausnehmung angeordnet ist oder diese bildet. Die Ausnehmungen verbreitern sich bis zu ihrem rückwärtigen Ende zu schneidkantenferneren Bereichen hin vorzugsweise linear konisch.

Wesentlich sind zwei Bedingungen, nämlich daß der ablaufende Span durch die erste schneidkantennächste Flanke eine Formung und Lenkung und in Verbindung mit der geschilderten Rippe eine Aufbiegung quer zur Ablaufrichtung erfährt, während die gegenüberliegende Flanke der Ausnehmung die Spanbewegung stabilisiert. Anders als in den nach dem Stand der Technik bekannten Ausführungsformen verbreitern sich die Ausnehmungen zu ihrem rückwärtigen Ende, so daß der Span vorteilhafterweise keine mit einer vergrößerten Reibung verursachte Stauchung erfährt.

Weiterbildungen der Erfindung sind in den Unteransprüchen beschrieben.

So sind die Ausnehmungen vorteilhafterweise im Querschnitt parallel zur Schneidkante im wesentlichen trapezförmig und weisen seitliche sich gegenüberliegende Flanken auf. Vorzugsweise verändert sich diese Trapezform von schneidkantennahen Parallelebenen zu schneidkantenferneren dergestalt, daß sowohl die "Basis" als auch das "Dach" in ihrer Größe zunehmen. Die Trapezform hat Vorteile bei der plastischen Spanverformung quer zur Ablaufrichtung.

Die Grenzlinien der seitlichen Flanken (in einer Draufsicht betrachtet) bilden miteinander einen Winkel von mindestens 5°, der die konische Erweiterung bestimmt. Vorzugsweise liegt der Winkel zwischen 5° und 15°. Nach einer besonderen Ausgestaltung der Erfindung ist die der wirksamen Schneidecke jeweils nächstliegende Grenzlinie der Ausnehmung derart angeordnet, daß sie mit einer Schneidkantennormalen einen Winkel von 0°, vorzugsweise einen positiven Winkel zwischen 5° und 25° bildet. Unter einem positiven Winkel ist ein solcher Winkel zu verstehen, der im Uhrzeigersinn gemessen wird.

Die jeweils der wirksamen Schneidkante entfernt liegendere Grenzlinie der Ausnehmung bildet mit einer Schneidkantennormalen ebenfalls einen positiven Winkel, wobei vorzugsweise beide Winkel der Grenzlinien positive Werte besitzen und der Winkel der schneidkantenferneren Grenzlinie zu der normalen größer als der Winkel der schneidkantennäheren Grenzlinie ist.

Die Flanken sind im wesentlichen eben ausgebildet und vorzugsweise an den Übergangsstellen zur ebenen Grundfläche der Ausnehmung und/oder zur Spanfläche abgerundet.

Nach einer weiteren Ausbildung der Erfindung variieren die Winkel der Grenzlinien von Ausnehmung zu Ausnehmung, vorzugsweise werden sie - von einer Schneidecke aus betrachtet - kleiner. Die Ausnehmungen sind somit unterschiedlich in bezug auf die Schneidkante bzw. Schneidkantennormalenrichtung geneigt.

Die Ausnehmungen können an die Schneidkante oder eine sich an die Schneidkante anschließende Fase angrenzen oder die Schneidkante oder die Fase oder beide durchbrechen, womit unterschiedlichen Schnittbedingungen Rechnung getragen werden kann.

Die der Schneidecke nahe Rippe bildet mit ihrem Scheitelkamm die höchste Erhebung in schneidkantennahen Bereichen, d.h. solchen Bereichen, die einem etwa vorhandenen mittleren Plateau vorgelagert sind.

Die Grenzlinie der rückwärtigen, der Schneidkante abgewandten Flanke bildet mit der Schneidkante in Draufsicht betrachtet einen Winkel, der negative, positive oder auch 0° annehmen kann. Vorzugsweise steht die Grenzlinie der rückwärtigen Flanke der ersten, d.h. schneideckennächsten Ausnehmung, unter einem negativen Winkel zur Schneidkante, während die Grenzlinie der darauffolgenden Ausnehmung größere Winkel, das sind entweder kleinere negative Winkel oder 0°- oder positive Winkel, bilden.

Nach einer weiteren Ausführungsform sind die Ausnehmungen innerhalb einer an die Schneidkante angrenzenden Spanleitstufe angeordnet. Diese Spanleitstufe (oder eine bereits erwähnte Fase) weist vorzugsweise einen positiven Winkel auf.

Der Flankenwinkel der seitlichen sich gegenüberliegenden Flanken (relativ zur die Schneidecken verbindenden Ebene) liegt zwischen 45° ± 20°, wobei vorzugsweise der Winkel der schneidkantennäheren Flanke jeweils größer als der der gegenüberliegenden Flanke ist.

Die Spanflächenabschnitte zwischen entlang einer Schneidkante benachbarten Ausnehmungen sind vorzugsweise gleich hoch (aber niedriger als die schneidkantennahe Rippe). In senkrechter Richtung zur Schneidkante liegt die Länge der Ausnehmungen bzw. die mittlere Länge zwischen 3/10 bis 4 mm, vorzugsweise zwischen 1 und 3 mm. Die größte Tiefe der Ausnehmung, bezogen auf die danebenliegenden Spanflächenabschnitte liegt zwischen 1/10 und 7/10 mm. Die Breite der Ausnehmungen - gemessen an einer der Schneidkante abstandsnächsten Parallelen - ist relativ zur Breite der zwischen zwei nebeneinanderliegenden Ausnehmungen befindlichen Stege genauso groß bis siebenmal so groß. Die Absolutwerte der Breite der Ausnehmungen liegt zwischen 1 und 5 mm, vorzugsweise zwischen 2 und 3,5 mm. Pro Schneidkante sind mindestens zwei Ausnehmungen vorgesehen.

Ein Ausführungsbeispiel der Erfindung ist in den Zeichnungen dargestellt. Es zeigen
- Fig. 1: eine Draufsicht auf einen erfindungsgemäßen Schneideinsatz,
- Fig. 2 bis 4: jeweils Schnittansichten entlang der Linien A - A, B - B und C - C,
- Fig. 5: eine Variante der Schnittansicht nach Fig. 2,
- Fig. 6 und 7: Varianten der Schnittansicht nach Fig. 3 und
- Fig. 8 und 9: jeweils vergrößerte Darstellungen alternativer Ausbildungen der Ausnehmungen und Fasenverläufe
- Fig. 10: eine weitere Ausführungsform eines erfindungsgemäßen Schneideinsatzes,
- Fig. 11a bis e: weitere Varianten der Ausnehmung in der Spanfläche, dargestellt in einer Draufsicht,
- Fig. 12: Ausführungsvarianten der Ausnehmungen, dargestellt in einer Querschnittsansicht parallel zur Schneidkante,
- Fig. 13a bis d: Ausführungsformen der Schneidkanten und
- Fig. 14a bis c: verschiedene Ausführungen der Wendeschneidplattenarten

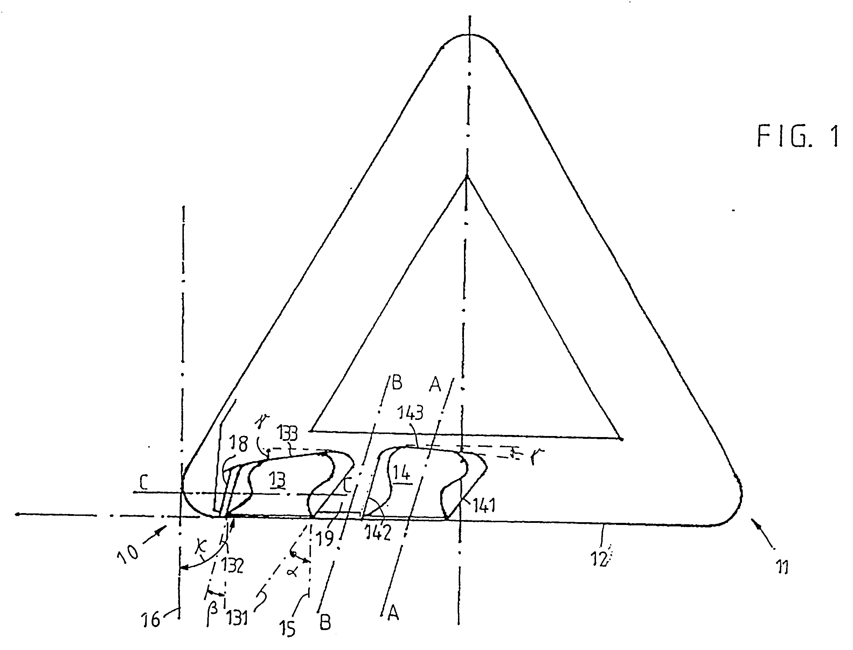

Die in Fig. 1 dargestellte Schneidplatte besitzt eine im wesentlichen dreieckige Form, es sind jedoch auch andere Grundformen, wie Rhombe, Quadrat, Rechteck oder auch hiervon abgeleitete Formen mit abgewinkelten Schneidkanten oder auch runde Formen möglich. Der Schneideinsatz besitzt zwischen zwei Schneidecken 10 und 11, d.h. entlang einer Hauptschneide 12, mehrere Ausnehmungen 13, 14, von denen zwei dargestellt sind. Diese Ausnehmungen besitzen seitliche Grenzlinien, die bzw. deren Verlängerungen 131 und 132 einen Winkel von 5 bis 15° miteinander bilden. Hierbei ist die schneideckennähere Grenzlinie 132 gegenüber einer Schneidkantennormalen um ca. 12° geneigt, während die gegenüberliegende Grenzlinie 132 eine Neigung von ca. 30° aufweist. Die Neigungswinkel α, β variieren von Ausnehmung zu Ausnehmung, wobei sie in schneidkantenferneren Bereichen größer werden, zu α = 14° bzw. β = 38°. Die Schneidkantennormale ist mit 15 bezeichnet, die Schnittebene, die den Anstellwinkel κ festlegt, trägt das Bezugszeichen 16.

Die rückwärtige Flanke bzw. Grenzlinie 133 bildet mit der Schneidkante einen negativen Winkel von ca. 13°, während die entsprechende Grenzlinie 143 der zweiten Ausnehmung 14 einen positiven Winkel von ca. 10° mit der Schneidkante bildet.

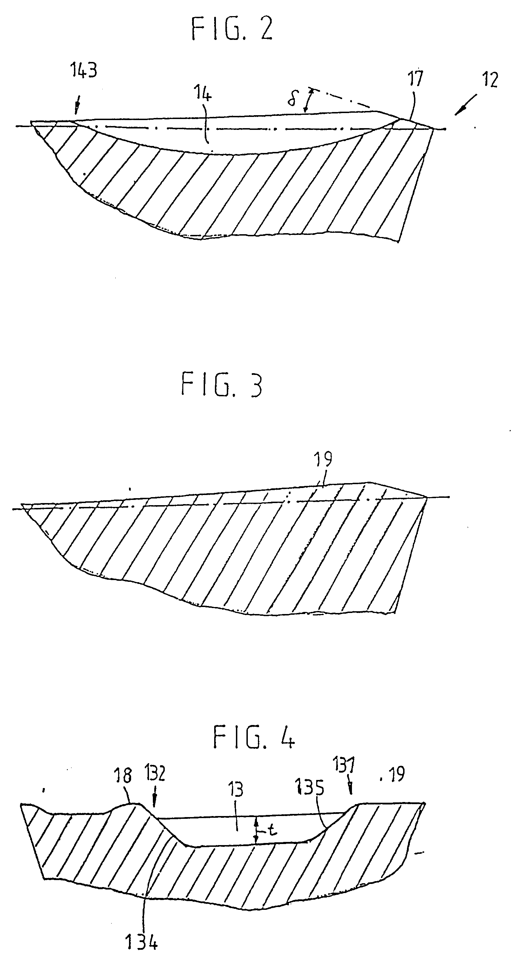

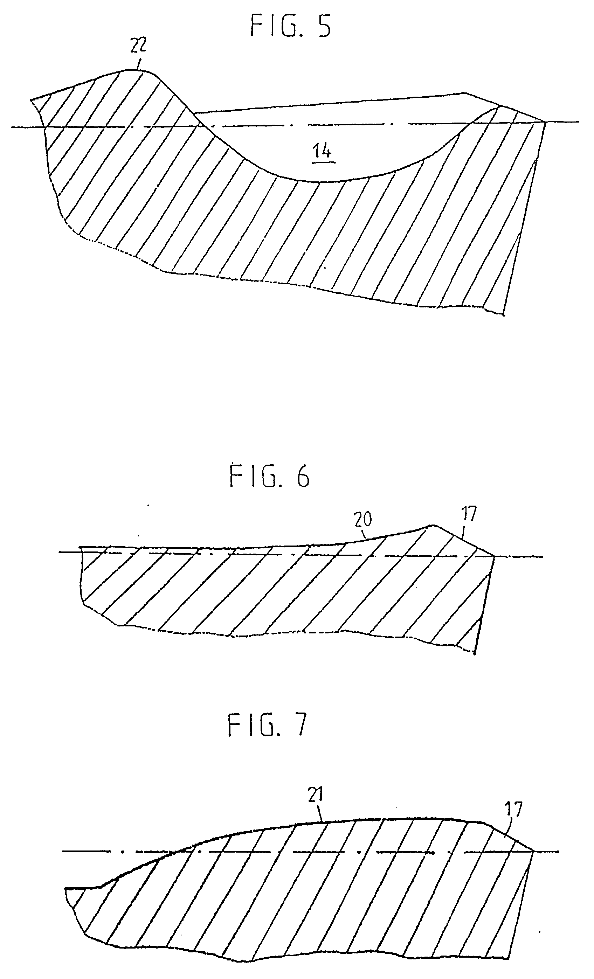

Wie Fig. 2 zu entnehmen ist, besitzt der Schneideinsatz im Anschluß an die Schneidkante 12 eine Fase 17 mit negativem Winkel. Die Ausnehmung 14 reicht bis in die Spanleitstufe hinein. Die Ausnehmungen 13, 14 sind muldenförmig ausgebildet und besitzen die in Fig. 4 entnehmbare Querschnitts-Trapezform. Hierbei sind eine schneidkantennähere Flanke 134 und eine schneidkantenfernere Flanke 135 gegenüberliegend angeordnet, im vorliegenden Fall unter verschiedenen Winkeln von ca. 45° und 40°, wobei die schneidkantennähere Flanke 134 steiler verläuft. Die Flanke 134 läuft zur Schneidkante hin gesehen in einer rippenförmigen Erhöhung 18 aus, deren Scheitelkamm, d.h., die höchste Erhöhung parallel zur Grenzlinie 142 verläuft oder diese bildet. Zwischen den Ausnehmungen 13, 14 befindet sich ein Steg 19, dessen Längsschnitt Fig. 3 zu entnehmen ist. Dieser Steg besitzt im Anschluß an die Schneidkante eine Fase und hieran anschließend zur Schneideinsatzmitte hin einen linear abfallenden Bereich. Alternativ hierzu ist es jedoch auch möglich, daß der abfallende Bereich konkav - siehe Bezugsziffer 20 - oder konvex - siehe Bezugsziffer 21 in Fig. 6 und 7 - verläuft.

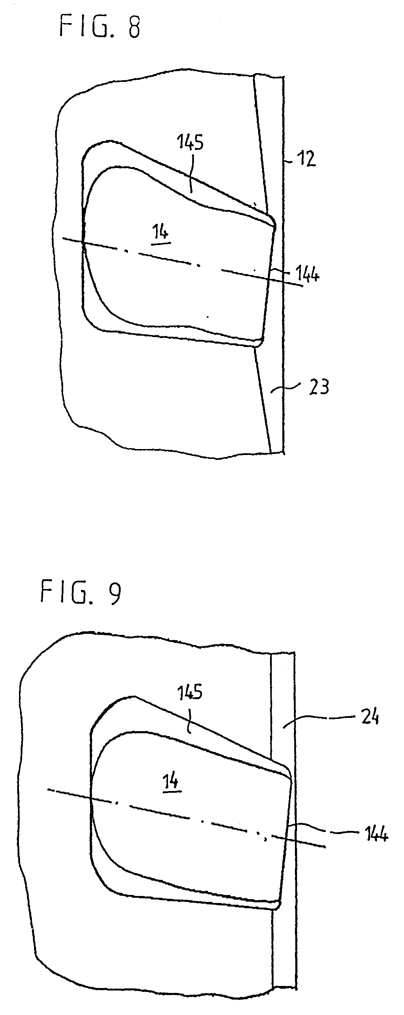

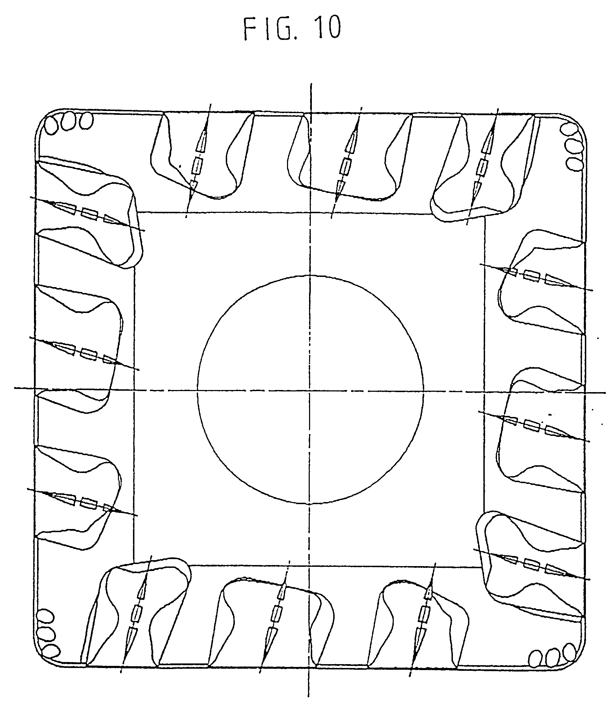

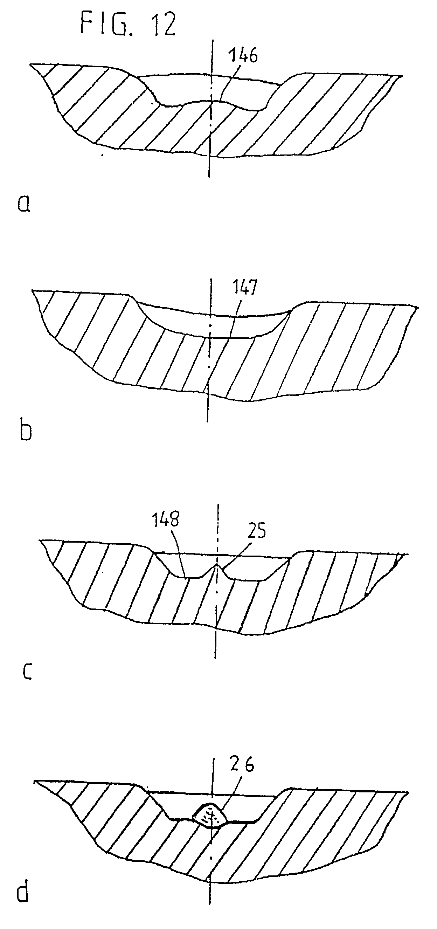

Fig. 5 zeigt eine dem Schnitt A - A entsprechende Ansicht, bei der im Unterschied zu der Ansicht nach Fig. 2 die Spanfläche im Anschluß an die Ausnehmung 14 ein Maximum 22 durchläuft, bevor sie abfällt. Fig. 8 und 9 sind jeweils Ausschnitte aus einer Draufsicht auf den Spanflächenbereich zu entnehmen, bei denen Fasen 23 bzw. 24 mit variabler Breite vorliegen. Bei der Ausführungsform nach Fig. 8 steigt die Breite der Fase 23 mit wachsender Nähe zur Ausnehmung 14 zunächst an, fällt dann im Bereich der vorderen Kante 144, die schräg zur Schneidkante 12 verläuft, wieder ab, um dann abermals zu breiteren Bereichen anzusteigen. Die Form der seitlichen Flanken 145 ist im wesentlichen durch die Spanflächengeometrie bestimmt. Die Ausnehmung 14 (und/oder 13) kann beispielsweise ohne Flankenübergang im mittleren hinteren Bereich in die Spanfläche übergehen. Weitere mögliche Muldengeometrien zeigt hierzu Fig. 12a bis d mit einem konvexen Boden 146 oder einem konkaven Boden 147 oder einem im wesentlichen ebenen Boden 148, auf dem bzw. aus dem herausragend erhabene Spanformelemente 25 angeordnet sein können. Wie Fig. 12d zeigt, können dies durchbrochene Rippen entsprechend der Darstellung nach Fig. 10 sein. Eine Beschreibung dieser Längsrippen einschließlich möglicher Ausführungsvarianten enthält die WO 92/21467, auf die ausdrücklich verwiesen wird. Die Längsrippen können entsprechend der Darstellung nach Fig. 10 vollständig in der Ausnehmung 13 und/oder 14 angeordnet sein oder diese Ausnehmung zu hinteren Bereichen hin überragen.

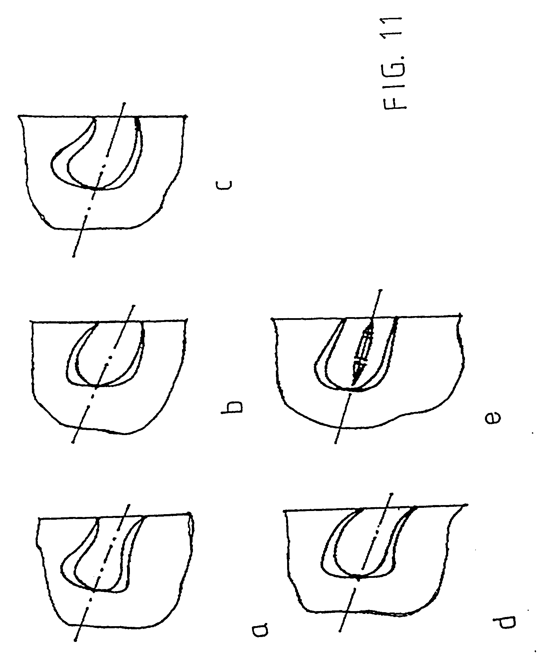

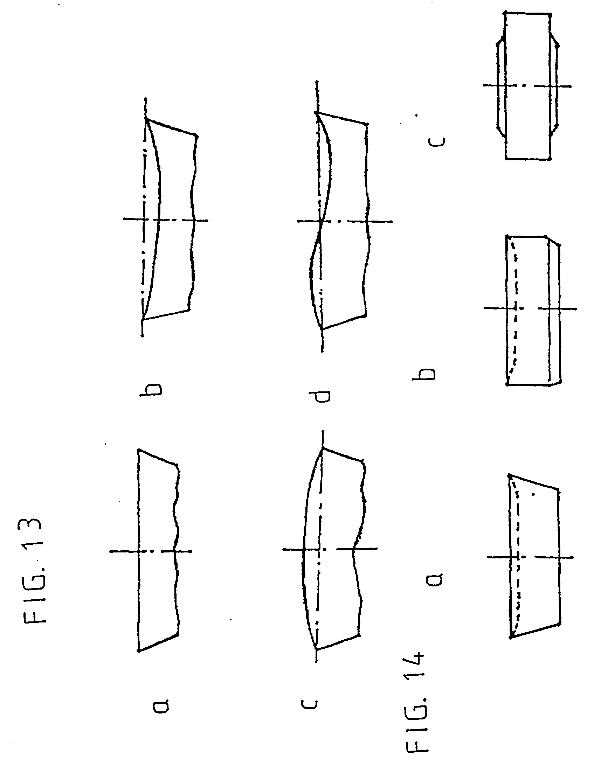

Aus Fig. 11a bis e sind weitere Geometrien der Ausnehmungen 13 und 14 ersichtlich. Die seitlichen Grenzlinien können konvex (Fig. 11a), konkav (Fig. 11b) oder auf der einen Seite konvex und der anderen Seite konkav sein oder (Fig. 11d) beidseitig konvex mit gleichgerichteter Krümmung oder weitgehend linear (Fig. 11e) verlaufen. Mögliche Ausführungen der Schneidkante zeigen Fig. 13a bis d. Die Schneidkante kann gerade, konkav, konvex, wellenförmig oder geradlinig bei positiver Freifläche, einseitig negativer Freifläche (Fig. 11f) oder mit einer 0°-Freifläche und Spanflächenplateau (Fig. 13g) ausgebildet sein.

Fig 14a bis c zeigen unterschiedliche Schneidplatten mit unterschiedlich geneigten Freiflächen und/oder abgesenktem oder erhabenem Mittelteil.

## Patentansprüche

1. Schneideinsatz für die spanende Bearbeitung, insbesondere zum Fräsen, mit einer Spanfläche, die Ausnehmungen enthält, die fortlaufend entlang der Schneidkante (12) angeordnet sind und die den Span quer zur Ablaufrichtung verformen und lenken, wobei die Ausnehmungen (13, 14) sich bis zu ihrem rückwärtigen Ende (133, 143) zu schneidkantenferneren Bereichen hin verbreitern,
**dadurch gekennzeichnet**,
daß zwischen einer Schneidecke (10) und der ersten Ausnehmung (13) eine rippenförmige Erhöhung (18) mit einer Längsachse, die parallel zur ersten schneideckennächsten Grenzlinie (132) der Ausnehmung (13) angeordnet ist oder diese bildet, vorgesehen ist.

2. Schneideinsatz nach Anspruch 1, dadurch gekennzeichnet, daß die Ausnehmungen (13, 14) im Querschnitt parallel zur Schneidkante (12) im wesentlichen trapezförmig sind und seitliche sich gegenüberliegende Flanken (134, 135) aufweisen.

3. Schneideinsatz nach Anspruch 2, dadurch gekennzeichnet, daß die Grenzlinien der seitlichen Flanken (134, 135) in Draufsicht betrachtet einen die konische Erweiterung bestimmenden Winkel (α - β) von mindestens 5° miteinander bilden.

4. Schneideinsatz nach Anspruch 3, dadurch gekennzeichnet, daß der in Anspruch 3 definierte Winkel (α - β) zwischen 5° und 15° liegt.

5. Schneideinsatz nach einem der Ansprüche 1 bis 4, dadurch gekennzeichnet, daß die der wirksamen Schneidecke (10) jeweils nächstliegende Grenzlinie (132) der Ausnehmung (13) mit einer Schneidkantennormalen einen Winkel β ≥ 0 bildet, vorzugsweise einen Winkel 5° ≤ β ≤ 25.

6. Schneideinsatz nach Anspruch 5, dadurch gekennzeichnet, daß die Grenzlinie (131, 141) der Ausnehmung (13, 14), die gegenüber der der wirksamen Schneidecke jeweils nächstliegenden Grenzlinie (132, 142) der Ausnehmung (13, 14) liegt, mit einer Schneidkantennormalen (15) einen Winkel α > 0 bildet, wobei vorzugsweise der in Anspruch 5 definierte Winkel β > 0 und α > β erfüllt sind.

7. Schneideinsatz nach einem der Ansprüche 2 bis 6, dadurch gekennzeichnet, daß die Flanken (134, 135) im wesentlichen eben sind, vorzugsweise an den Übergangsstellen zur ebenen Grundfläche der Ausnehmung und/oder zur Spanfläche abgerundet sind.

8. Schneideinsatz nach einem der Ansprüche 5 bis 7, dadurch gekennzeichnet, daß die in Anspruch 3 definierten Winkel (α, β) zwischen den Grenzlinien (132, 131, 142, 141) der Ausnehmungen (13, 14) von Ausnehmung (13) zu Ausnehmung (14) variieren, vorzugsweise fortlaufend - von einer Schneidecke (10) aus betrachtet - kleiner werden.

9. Schneideinsatz nach einem der Ansprüche 1 bis 8, dadurch gekennzeichnet, daß die Ausnehmungen an die Schneidkante oder an eine sich an die Schneidkante anschließende Fase angrenzen oder die Schneidkante (12) und/oder die Fase durchbrechen.

10. Schneideinsatz nach Anspruch 9, dadurch gekennzeichnet, daß die rippenförmige Erhöhung (18) mit ihrem Scheitelkamm die höchste Erhebung im schneidkantennahen Bereich bildet.

## Claims

1. Cutting insert for material-removing machining, in particular for milling, with a rake face which has recesses which are arranged in a row along a cutting edge (12) and which form and guide the chip transversely of its travel direction whereby the recesses (13, 14) widen toward their rear ends (133, 134) into regions away from the cutting edge,
**characterised in that**,
between a cutting corner (10) and the first recess (13) a rib-shaped projection (18) with a longitudinal axis is provided which is arranged parallel to or forms the edge (132) of the recess (13) closest to the cutting edge.

2. Cutting insert according to claim 1, characterised in that the recesses (13, 14) are generally trapezoidal in section parallel to the cutting edge (12) and have lateral opposing flanks (134, 135).

3. Cutting insert according to claim 2, characterised in that the edges of the lateral flanks (134, 135) seen in top view form with each other angle (α - β) of at least 5° forming the conical widening.

4. Cutting insert according to claim 3, characterised in that the angle (α - β) defined in claim 3 is between 5° and 15°.

5. Cutting insert according to one of the claims 1 to 4, characterised in that the edge (132) of the recess (13) closest to the effective cutting corner (10) forms with a perpendicular to the cutting edge an angle β ≥ 0, preferably an angle whereby 5° ≤ β ≤ 25°.

6. Cutting insert according to claim 5, characterised in that the edges (131, 141) of the recess (13, 14) arranged opposite the edge (132, 142) of the recess and closest to the effective cutting corner form with a perpendicular (15) to the cutting edge an angle α > 0, preferably wherein the angle (β) defined in claim 5 is β > 0 and α > β.

7. Cutting insert according to one of claims 2 to 6, characterised in that the flanks (134, 135) are generally planar, preferably rounded where they merge with the planar floor of the recesses and/or with the rake face.

8. Cutting insert according to one of claims 5 to 7, characterised in that the angles (α, β) of the edges (132, 131, 142, 141) defined in claim 3 vary from recess (13) to recess (14), preferably uniformly grow less away from a cutting corner (10).

9. Cutting insert according to one of claims 1 to 8, characterised in that the recesses extend up to the cutting edge or to a bevel running along the cutting edge or actually extend into the cutting edge (12) and/or the bevel.

10. Cutting insert according to claim 9, characterised in that the rib-shaped raised region (18) forms at its summit the highest point in the region near the cutting edge.

## Revendications

1. Insert de coupe pour l'usinage à enlèvement de copeaux, en particulier pour le fraisage, avec une face de coupe qui présente des évidements qui sont disposés à la file le long du tranchant (12) et qui forment et guident le copeau transversalement à la direction d'écoulement, les évidements (13, 14) s'élargissant jusqu'à leur bout arrière (133, 143) vers des régions situées plus loin du tranchant,
**caractérisé par le fait**
que l'on prévoit entre un coin de coupe (10) et le premier évidement (13) une élévation (18) en forme de nervure avec un axe longitudinal qui est disposé parallèlement à la première ligne limite (132) de l'évidement (13), située le plus près du coin de coupe, ou forme celle-ci.

2. Insert de coupe selon la revendication 1, caractérisé par le fait que les évidements (13, 14) sont pour l'essentiel trapézoïdaux en coupe transversale parallèle au tranchant (12) et présentent des flancs latéraux opposés (134, 135).

3. Insert de coupe selon la revendication 2, caractérisé par le fait que les lignes limites des flancs latéraux (134, 135), vues de dessus, forment l'une avec l'autre un angle (α - β) de 5° du moins qui détermine l'élargissement conique.

4. Insert de coupe selon la revendication 3, caractérisé par le fait que l'angle (α - β) défini dans la revendication 3 est compris entre 5° et 15°.

5. Insert de coupe selon l'une des revendications 1 à 4, caractérisé par le fait que la linge limite (132) de l'évidement (13), qui est située respectivement le plus près du coin de coupe effectif (10), forme avec une normale au tranchant un angle β ≥ 0, de préférence un angle de 5° ≤ β ≤ 25°.

6. Insert de coupe selon la revendication 5, caractérisé par le fait que la ligne limite (131, 141) de l'évidement (13, 14), qui est située en face de la ligne limite (132, 142) de l'évidement (13, 14), située respectivement le plus près du coin de coupe effectif, forme avec une normale (15) au tranchant un angle α > 0, de préférence, l'angle défini dans la revendication 5 remplissant la condition β > 0 et α > β.

7. Insert de coupe selon l'une des revendications 2 à 6, caractérisé par le fait que les flancs (134, 135) sont pour l'essentiel plans, de préférence arrondis aux endroits de transition vers la surface plane de base de l'évidement et/ou vers la face de coupe.

8. Insert de coupe selon l'une des revendications 5 à 7, caractérisé par le fait que les angles (α, β) entre les lignes limites (132, 131, 142, 141) des évidements (13, 14), qui sont définis dans la revendication 3 varient d'un évidement (13) à l'autre (14), de préférence - vu d'un coin de coupe (10) - diminuent de façon continue.

9. Insert de coupe selon l'une des revendications 1 à 8, caractérisé par le fait que les évidements sont contigus au tranchant ou à un chanfrein adjacent au tranchant ou s'étendent dans le tranchant (12) et/ou le chanfrein.

10. Insert de coupe selon la revendication 9, caractérisé par le fait que l'élévation (18) en forme de nervure forme avec son sommet l'élévation la plus haute dans la région située près du tranchant.
